# EUROPÄISCHE PATENTSCHRIFT

(11) **EP 2 637 834 B1**
(45) Veröffentlichungstag und Bekanntmachung des Hinweises auf die Patenterteilung: **12.03.2014**
(21) Anmeldenummer: 11723177.9
(22) Anmeldetag: 25.03.2011
(51) Int. Cl.: B29C 43/36, B29C 35/02, B29C 70/44

(54) **BEHEIZBARE VAKUUMHAUBEN-VORRICHTUNG**
HEATABLE VACUUM BAG DEVICE
DISPOSITIF DE SAC A VIDE RÉCHAUFFABLE

(30) Priorität: 10.11.2010 WO PCT/DE2010/001313
(43) Veröffentlichungstag der Anmeldung: 18.09.2013
(73) Patentinhaber: Waldemar Piekenbrink Gfk - Modell- und Formenbau Produktions- und Vertriebs GmbH, 88471 Laupheim (DE)
(72) Erfinder: PIEKENBRINK, Björn, 88471 Laupheim (DE); PIEKENBRINK, Olaf, 88471 Laupheim (DE); ÜBERLE, Stefan, 88416 Steinhausen (DE)
(74) Vertreter: Kiessling, Christian
(86) Internationale Anmeldenummer: PCT/DE2011/000328
(87) Internationale Veröffentlichungsnummer: WO 2012/062235

(56) Entgegenhaltungen:
- EP-A1- 1 892 078
- WO-A1-2009/035403
- WO-A1-2011/030169
- DE-U1- 20 010 601
- GB-A- 2 322 823
- US-A- 5 863 452
- US-A- 6 031 212

## Beschreibung

Die Erfindung betrifft eine Vakuumhauben-Vorrichtung mit einer Vakuumhaube zum gasdichten Abdecken während eines mittels Gasdruck bewirkten Verpressens einer Schicht eines auf einen festen Formkörper aufgebrachten aushärtbaren Kompositsubstrats enthaltend eine Faserstruktur und eine in die Faserstruktur eingebrachte Matrix eines aushärtbaren viskosen Füllmaterials.

Vakuumhauben-Vorrichtungen finden Verwendung in dem Verfahren der Vakuumevakuierung, bei dem moderne Kunststoffmaterialien in eine vorherbestimmte Form gebracht und anschließend ausgehärtet werden.

Bei einem Vorgang der Vakuumevakuierung gemäß Stand der Technik wird ein als Formkörper ausgebildetes Werkstück in der Regel mittels einer Dichtungsfolie und einer die Dichtungsfolie gegenüber einem Formkörper gasdicht abschirmende Dichtschnur von der Umgebungsatmosphäre abgeschirmt bzw. evakuiert und anschließend unter Vakuumdruck gesetzt.

Ein Nachteil bei diesem Verfahren liegt darin, dass eine ausreichende Abdichtung zwischen Dichtungsfolie und Formkörper insbesondere in einem peripheren Bereich der Dichtungsfolie nur unter hohem Aufwand an Material und Zeit für eine manuell auszuführende Abdichtungsarbeit erreicht wird, wobei eine exakte Anbringung einer Dichtungsfolie an einem Formkörper insbesondere bei stark ausgeprägten konkav/konvexen Konturen des Formkörpers nicht immer möglich ist.

Ein weiterer Nachteil der bekannten Dichtungsfolien ist der Mangel einer mehrfachen Verwendbarkeit.

Darüber hinaus sind im Stand der Technik passgenaue und mehrfach verwendbare Vakuumhauben bekannt, die aus einem elastischen Kunststoffmaterial hergestellt sind. Nachteilig ist bei diesen Vakuumhauben indes, dass eine direkte Temperatursteuerung des zu verpressenden Kompositsubstrats während des Vorgangs einer Vakuumverpressung nicht möglich ist.

WO-A-2009 035 403 und US-A-6 031 212 offenbaren Vakuumhauben-Vorrichtungen, wobei elektrische Leiter zur Temperaturbeeinflussung verwendet werden.

Aufgabe der Erfindung ist es deshalb, eine passgenau aufbringbare und mehrfach verwendbare Vakuumhauben-Vorrichtung zu schaffen, bei der während eines Vorgangs der Vakuumverpressung eine Temperaturbeeinflussung des zu verpressenden Materials ermöglicht ist.

Für eine Vakuumhauben-Vorrichtung der eingangs genannten Art wird diese Aufgabe erfindungsgemäß dadurch gelöst, dass die Vakuumhaube aus einem elastischen Kunststoffmaterial hergestellt ist, dessen Temperatur mittels einer elektrischen Heizeinrichtung einstellbar ist, gemäß den Merkmalen des anliegenden Anspruchs 1.

Bevorzugte Ausführungsformen der Erfindung sind Gegenstand der Unteransprüche.

Bei der erfindungsgemäßen Vorrichtung wird durch die Merkmalskombination, dass die Vakuumhaube aus einem elastischen Kunststoffmaterial hergestellt ist, dessen Temperatur mittels einer elektrischen Heizeinrichtung einstellbar ist, erreicht, dass ein Herausdrücken und Ausgasen von in dem zu verpressenden aushärtbaren Kompositsubstrat eingefangenen Luft- oder Gasbläschen verbessert und beschleunigt wird, da über die Temperatursteuerung eine Steuerung und dabei insbesondere Erhöhung der Viskosität des in der Regel im Anfangsstadium einer Aushärtung zähflüssigen Kompositsubstrats ermöglicht ist.

Ein weiterer wichtiger Vorteil der erfindungsgemäßen Vakuumhauben-Vorrichtung ist darin zu sehen, dass der Vorgang des Aushärtens eines Kompositsubstrats durch gezieltes Einstellen einer vorgegebenen Initialtemperatur des Kompositsubstrats in Gang gesetzt werden kann.

Gemäß einer ersten bevorzugten Ausführungsform der erfindungsgemäßen Vorrichtung ist vorgesehen, dass die Heizeinrichtung ausgelegt ist, um die Temperatur der Vakuumhaube während eines vorgegebenen Zeitraums auf einen Wert zwischen 20°C und 200°C einzustellen.

Die Heizeinrichtung kann dabei ausgelegt sein, um die Temperatur der Vakuumhaube während eines vorgegebenen Zeitraums auf einen konstanten Wert einzustellen, oder sie kann alternativ ausgelegt sein, um die Temperatur der Vakuumhaube während eines vorgegebenen Zeitraums entsprechend einem vorherbestimmten Verlauf einzustellen.

Vorzugsweise ist die Heizeinrichtung von einem elektrischen Leiter gebildet, der in das Material der Vakuumhaube integriert ist. Der elektrische Leiter kann beispielsweise von einem Geflecht dünner Metalldrähte oder auch von einem oder mehr Kohlefaserfaden gebildet sein.

Gemäß einer wichtigen bevorzugten Ausführungsform der erfindungsgemäßen Vorrichtung ist vorgesehen, dass der elektrische Leiter von einer eine Mehrzahl von Kohlefasern enthaltenden Kohlefaserkordel gebildet ist.

Der elektrische Leiter kann gerade oder mäanderförmig in dem Material der Vakuumhaube verlegt sein, je nachdem, ab eine kleinere oder eine größere Fläche beheizt werden soll. Um eine ausreichende Erwärmung des Materials der Vakuumhaube sicherzustellen, ist es vorteilhaft, wenn der elektrische Leiter einen elektrischen Widerstand im Bereich von 20 Ohm bis 60 Ohm bei einer Spannung im von etwa 260 V aufweist. Übertragen auf eine Spannung im Bereich von etwa 48 V bedeutet dies, dass der elektrische Leiter dann einen elektrischen Widerstand im Bereich von 2 Ohm bis 20 Ohm aufweist.

Gemäß einer weiteren wichtigen bevorzugten Ausführungsform der erfindungsgemäßen Vorrichtung ist vorgesehen, dass in einem peripheren Bereich der Vakuumhaube ein Dichtkeil ausgebildet ist, der während eines Verpressens der Schicht aus aushärtbarem Kompositsubstrat in eine in einem peripheren Bereich des Formkörpers ausgebildete Dichtnut gasdicht eingreift.

Das elastische Kunststoffmaterial der Vakuumhaube ist vorzugsweise von einem Silikonkunststoff, von einem Latexmaterial oder von einem Elastomer gebildet, und die Faserstruktur ist vorzugsweise von einem Fasergewebe gebildet.

Die erfindungsgemäße Vorrichtung wird im Folgenden anhand einer bevorzugten Ausführungsform erläutert, die in den Figuren der Zeichnung dargestellt sind. Darin zeigen:
- Fig. 1: eine bevorzugte Ausführungsform der erfindungsgemäßen Vorrichtung in einer Ansicht von schräg oben;
- Fig. 2: in Fig. 1 dargestellte bevorzugte Ausführungsform der erfindungsgemäßen Vorrichtung in einer Detailansicht von unten.

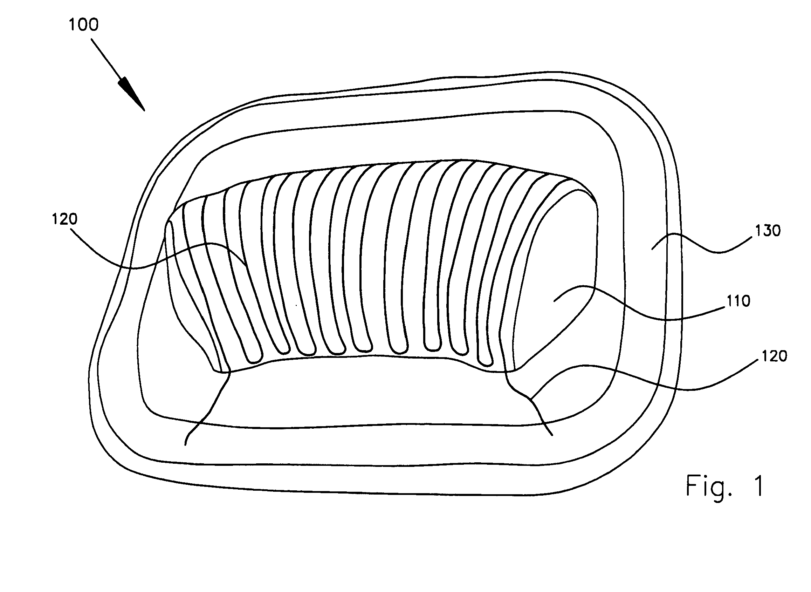

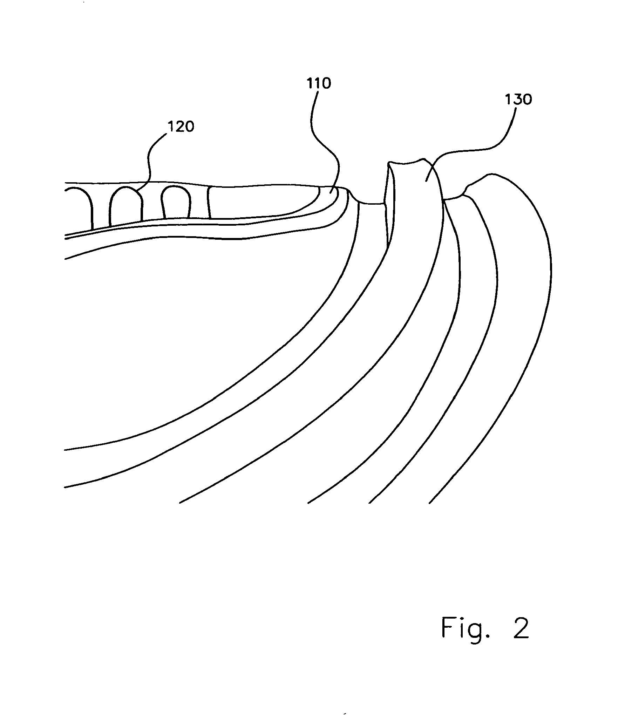

Die in den Figuren 1 und 2 dargestellte erfindungsgemäße Vakuumhauben-Vorrichtung 100 enthält eine Vakuumhaube 110 zum gasdichten Abdecken während eines mittels Gasdruck bewirkten Verpressens einer Schicht eines auf einen festen Formkörper aufgebrachten aushärtbaren viskosen Kompositsubstrats.

In das Kompositsubstrat eingebettet ist dabei eine von einem Fasergewebe gebildete Faserstruktur und eine in die Faserstruktur eingebrachte Matrix eines aushärtbaren Füllmaterials, wobei die Vakuumhaube 110 aus einem elastischen Silikonkunststoff hergestellt ist, dessen Temperatur mittels einer elektrischen Heizeinrichtung 120 einstellbar ist.

Die Heizeinrichtung 120 ist ausgelegt, um die Temperatur der Vakuumhaube 10 während eines vorgegebenen Zeitraums auf einen Wert zwischen 20°C und 200°C einzustellen, wobei die Heizeinrichtung 120 ausgelegt ist, um die Temperatur der Vakuumhaube 110 während eines vorgegebenen Zeitraums auf einen konstanten Wert einzustellen oder alternativ, um die Temperatur der Vakuumhaube 110 während eines vorgegebenen Zeitraums entsprechend einem vorherbestimmten Verlauf einzustellen oder zu regeln.

Die Heizeinrichtung 120 ist von einem elektrischen Leiter gebildet, der in das Material der Vakuumhaube 110 integriert ist, wobei der elektrische Leiter von einer eine Mehrzahl von Kohlefasern enthaltenden Kohlefaserkordel gebildet ist, der mäanderförmig in dem Material der Vakuumhaube 110 verlegt ist.

Die Kohlefaserkordel weist einen elektrischen Widerstand im Bereich von etwa 5 Ohm bei einer Spannung von 48 V auf.

In einem peripheren Bereich der Vakuumhaube 110 ist ein Dichtkeil 130 ausgebildet, der während eines Verpressens der Schicht aus aushärtbarem Kompositsubstrat in eine in einem peripheren Bereich des Formkörpers ausgebildete Dichtnut gasdicht eingreift.

Das elastische Kunststoffmaterial der Vakuumhaube 110 ist von einem Silikonkunststoff gebildet.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Vakuumhauben-Vorrichtung (100) mit einer Vakuumhaube (110) zum gasdichten Abdecken während eines mittels Gasdruck bewirkten Verpressens einer Schicht eines auf einen festen Formkörper aufgebrachten aushärtbaren Kompositsubstrats enthaltend eine Faserstruktur und eine in die Faserstruktur eingebrachte Matrix eines aushärtbaren viskosen Füllmaterials, wobei die Vakuumhaube (110) aus einem elastischen Kunststoffmaterial hergestellt ist, dessen Temperatur mittels einer elektrischen Heizeinrichtung (120) einstellbar ist, **dadurch gekennzeichnet, dass** die Heizeinrichtung (120) von einem elektrischen Leiter gebildet ist, der in das Material der Vakuumhaube (110) integriert ist, wobei der elektrische Leiter einen elektrischen Widerstand im Bereich von 2 Ohm bis 20 Ohm bei einer Spannung im Bereich von etwa 48 V aufweist.

2. Vorrichtung nach Anspruch 1, **dadurch gekennzeichnet, dass** die Heizeinrichtung (120) ausgelegt ist, um die Temperatur der Vakuumhaube (110) während eines vorgegebenen Zeitraums auf einen Wert zwischen 20°C und 200°C einzustellen.

3. Vorrichtung nach einem der Ansprüche 1 oder 2, **dadurch gekennzeichnet, dass** die Heizeinrichtung (120) ausgelegt ist, um die Temperatur der Vakuumhaube (110) während eines vorgegebenen Zeitraums auf einen konstanten Wert einzustellen.

4. Vorrichtung nach einem der Ansprüche 1 oder 2, **dadurch gekennzeichnet, dass** die Heizeinrichtung (120) ausgelegt ist, um die Temperatur der Vakuumhaube (110) während eines vorgegebenen Zeitraums entsprechend einem vorherbestimmten Verlauf einzustellen.

5. Vorrichtung nach einem der Ansprüche 1 bis 4, **dadurch gekennzeichnet, dass** der elektrische Leiter von einem Metallgeflecht gebildet ist.

6. Vorrichtung nach einem der Ansprüche 1 bis 4, **dadurch gekennzeichnet, dass** der elektrische Leiter von einem Kohlefaserfaden gebildet ist.

7. Vorrichtung nach einem der Ansprüche 1 bis 4, **dadurch gekennzeichnet, dass** der elektrische Leiter von einer eine Mehrzahl von Kohlefasern enthaltenden Kohlefaserkordel gebildet ist.

8. Vorrichtung nach einem der Ansprüche 5 bis 7, **dadurch gekennzeichnet, dass** der elektrische Leiter mäanderförmig in dem Material der Vakuumhaube (110) verlegt ist.

9. Vorrichtung nach einem der vorhergehenden Ansprüche, **dadurch gekennzeichnet, dass** in einem peripheren Bereich der Vakuumhaube (110) ein Dichtkeil (130) ausgebildet ist, der während eines Verpressens der Schicht aus aushärtbarem Kompositsubstrat in eine in einem peripheren Bereich des Formkörpers ausgebildete Dichtnut gasdicht eingreift.

10. Vorrichtung nach einem der Ansprüche 1 bis 9, **dadurch gekennzeichnet, dass** das elastische Kunststoffmaterial der Vakuumhaube (110) ein Silikonkunststoff ist.

11. Vorrichtung nach einem der Ansprüche 1 bis 9, **dadurch gekennzeichnet, dass** das elastische Kunststoffmaterial der Vakuumhaube (110) von einem Latexmaterial gebildet ist.

12. Vorrichtung nach einem der Ansprüche 1 bis 9, **dadurch gekennzeichnet, dass** das elastische Kunststoffmaterial der Vakuumhaube (110) von einem Elastomer gebildet ist.

13. Vorrichtung nach einem der vorhergehenden Ansprüche, **dadurch gekennzeichnet, dass** die Faserstruktur von einem Fasergewebe gebildet ist.

## Claims

1. A vacuum bag device (100) comprising a vacuum bag (110) for the provision of a gas-tight cover over a layer of a curable composite composition pressed against a solid shaped body by means of gas pressure, which composition has a fiber structure containing a matrix of embedded a curable viscous filling material, wherein said vacuum bag (110) is fabricated from an elastic plastics material, the temperature of which can be adjusted by means of electric heating means (120), **characterized in that** said heating means (120) is formed by an electric conductor embedded in the material of said vacuum bag (110), wherein said electric conductor has an electrical resistance ranging from 2 Ohm to 20 Ohm at a voltage in the region of approximately 48 V.

2. The device as defined in claim 1, **characterized in that** said heating means (120) is adapted to set the temperature of said vacuum bag (110) over a specified period of time to a value between 20 °C and 200 °C.

3. The device as defined in claims 1 or claim 2, **characterized in that** said heating means (120) is adapted to set the temperature of the vacuum bag (110) over a specified period of time to a constant value.

4. The device as defined in claims 1 or claim 2, **characterized in that** said heating means (120) is adapted to set the temperature of said vacuum bag (110) over a specified period of time according to a predefined temperature profile.

5. The device as defined in any one of claims 1 to 4, **characterized in that** said electric conductor is in the form of a metal braid.

6. The device as defined in any one of claims 1 to 4, **characterized in that** said electric conductor is formed by a carbon fiber thread.

7. The device as defined in any one of claims 1 to 4, **characterized in that** said electric conductor is formed by a carbon fiber cord containing a plurality of carbon fibers.

8. The device as defined in any one of claims 5 to 7, **characterized in that** said electric conductor is meanderingly disposed in the material of said vacuum bag (110).

9. The device as defined in any one of the previous claims, **characterized in that** in a peripheral region of said vacuum bag (110) a sealing lip (130) is formed, which engages in a gas-tight manner in a sealing groove formed in a peripheral region of said molded article, when said layer of curable composite composition is pressed thereagainst.

10. The device as defined in any one of claims 1 to 9, **characterized in that** said elastic plastics material of said vacuum bag (110) is a silicon plastics material.

11. The device as defined in any one of claims 1 to 9, **characterized in that** said elastic plastics material of said vacuum bag (110) is formed by a latex material.

12. The device as defined in any one of claims 1 to 9, **characterized in that** said elastic plastics material of said vacuum bag (110) is formed by an elastomer.

13. The device as defined in any one of the previous claims, **characterized in that** said fiber structure is formed by a fabric.

## Revendications

1. Dispositif de couvercle à vide (100) comportant un couvercle à vide (110) destiné au recouvrement étanche aux gaz pendant une compression, réalisée par application d'une pression de gaz, d'une couche d'un substrat composite durcissable qui est appliqué sur un corps moulé solide et qui comporte une structure fibreuse et une matrice d'un matériau de remplissage visqueux durcissable introduit dans la structure fibreuse, le couvercle à vide (110) étant fabriqué à partir d'un matériau élastique en matière plastique dont la température est réglable au moyen d'un équipement de chauffage (120) électrique, **caractérisé en ce que** l'équipement de chauffage (120) est constitué par un conducteur électrique qui est intégré dans le matériau du couvercle à vide (110), le conducteur électrique présentant une résistance électrique située entre 2 ohm et 20 ohm pour une tension située aux environs de 48 V.

2. Dispositif selon la revendication 1, **caractérisé en ce que** l'équipement de chauffage (120) est conçu pour régler la température du couvercle à vide (110) sur une valeur située entre 20°C et 200°C durant un laps de temps préfixé.

3. Dispositif selon une des revendications 1 ou 2, **caractérisé en ce que** l'équipement de chauffage (120) est conçu pour régler la température du couvercle à vide (110) sur une valeur constante durant un laps de temps préfixé.

4. Dispositif selon une des revendications 1 ou 2, **caractérisé en ce que** l'équipement de chauffage (120) est conçu pour régler la température du couvercle à vide (110) en fonction d'un déroulement prédéterminé durant un laps de temps préfixé.

5. Dispositif selon une des revendications 1 à 4, **caractérisé en ce que** le conducteur électrique est constitué par une toile de fils métalliques.

6. Dispositif selon une des revendications 1 à 4, **caractérisé en ce que** le conducteur électrique est constitué par un filament de fibre de carbone.

7. Dispositif selon une des revendications 1 à 4, **caractérisé en ce que** le conducteur électrique est constitué par un cordon de fibres de carbone comprenant une pluralité de fibres de carbone.

8. Dispositif selon une des revendications 1 à 7, **caractérisé en ce que** le conducteur électrique est agencé en méandres dans le matériau du couvercle à vide (110).

9. Dispositif selon une des revendications précédentes, **caractérisé en ce que**, dans une zone périphérique du couvercle à vide (110), un coin d'étanchéité (130) est réalisé, qui, pendant une compression de la couche en substrat composite durcissable, vient s'engager de manière étanche aux gaz dans une rainure d'étanchéité réalisée dans une zone périphérique du corps moulé.

10. Dispositif selon une des revendications 1 à 9, **caractérisé en ce que** le matériau élastique en matière plastique du couvercle à vide (110) est une matière plastique silicone.

11. Dispositif selon une des revendications 1 à 9, **caractérisé en ce que** le matériau élastique en matière plastique du couvercle à vide (110) est constitué d'un latex.

12. Dispositif selon une des revendications 1 à 9, **caractérisé en ce que** le matériau élastique en matière plastique du couvercle à vide (110) est constitué d'un élastomère.

13. Dispositif selon une des revendications précédentes, **caractérisé en ce que** la structure fibreuse est constituée d'un tissu de fibres.
